# EUROPÄISCHE PATENTANMELDUNG

(11) **EP 0 570 900 A1**
(43) Veröffentlichungstag der Anmeldung: **24.11.1993**
(21) Anmeldenummer: 93108054.3
(22) Anmeldetag: 18.05.1993
(51) Int. Cl.: A47L 13/51

(54) **Reinigungswagen**

(30) Priorität: 19.05.1992 DE 9206733 U
(71) Anmelder: VERMOP SALMON GMBH, D-97877 Wertheim (DE)
(72) Erfinder: Mraz, Rainer, c/o KEIL & SCHAADHAUSEN, W-6000 Frankfurt am Main 1 (DE)
(74) Vertreter: Keil, Rainer A., Dipl.-Phys. Dr.

(57) **Zusammenfassung**

Die Erfindung bezieht sich auf einen Reinigungswagen (1) zum Transport von Behältern (12, 13), wie Eimern, unterschiedlicher Aufstandsfläche, mit Seitenbügeln (2,3), einem die Seitenbügeln (2, 3) verbindenden Querholm (7, 8), an den Enden der Seitenbügel (2, 3) angeordneten Rollenelementen (5), sowie einem aus stirnseitigen Befestigungsstreben (21) und diese verbindenden Längsstreben (20) gebildeten Bodenrost (4) für die Aufnahme der Behälter (12, 13), wobei der Bodenrost (4) stirnseitig z.B. durch Aufbiegungen der Längsstreben (20) gebildete erste Anschläge (26) aufweist, und wobei auf den Längsstreben (20) wenigstens eine, einen weiteren Anschlag bildende Querstrebe (22) in einem Abstand von der den Querholm (7, 8) aufnehmenden Vertikalebene angeordnet ist, welcher kleiner ist als der Abstand der ersten Anschläge (26) von der Vertikalebene, jedoch geringfügig größer als die in Richtung der Längsstreben (20) gesehene Breite der Aufstandsfläche wenigstens einer der Behälter (12, 13).

## Beschreibung

Die Erfindung betrifft einen Reinigungswagen zum Transport von Behältern, wie Eimern, unterschiedlicher Aufstandsfläche, mit Seitenbügeln, einem die Seitenbügel verbindenden Querholm, an den Enden der Seitenbügel angeordneten Rollenelementen, sowie einem aus stirnseitigen Befestigungsstreben und diese verbindenden Längsstreben gebildeten Bodenrost für die Aufnahme der Behälter, wobei der Bodenrost stirnseitig z.B. durch Aufbiegungen der Längsstreben gebildete erste Anschläge aufweist.

Derartige Reinigungswagen werden vor allem zum Reinigen größerer Flächen, wie bspw. in Krankenhäusern, Hotels, Büros u. dgl. Gewerbeflächen, insbesondere zum Naßwischen mit sogenannten Naßwischmops eingesetzt. Ein solcher Reinigungswagen ist in der Regel mit zwei gleichen Eimern, einer links, einer rechts von der den Querholm aufnehmenden Vertikalebene, bestückt. Das Abrutschen der Eimer von dem Bodenrost wird seitlich durch die Seitenbügel und stirnseitig durch die als Anschläge wirkenden stirnseitigen Aufbiegungen der Längsstreben verhindert. Der eine Eimer ist mit klarem Wasser und der andere mit reinigungs- und/oder desinfektionsmittelhaltigem Wasser gefüllt. Der frische Mopbezug wird zunächst in den Eimer mit dem Reinigungs- und/oder Desinfektionsmittel eingetaucht. Nach dem Wischen des Bodens wird der Mopbezug dann zunächst in den Eimer mit dem klaren Wasser eingetaucht, um den vom Boden aufgenommenen Schmutz auszuwaschen. Anschließend taucht man ihn in den Eimer mit dem Reinigungs- und/oder Desinfektionsmittel, um ihn für das nächste Naßwischen vorzubereiten. Dazwischen wird der Mopbezug in der Regel mit Hilfe einer Moppresse ausgedrückt. Je nach Größe der Eimer und nach Verwendungszweck werden derartige Reinigungswagen in verschiedenen Abmessungen und Ausführungen hergestellt. Nachteilig ist, daß für jeden so ausgestatteten Reinigungswagen immer nur ein Eimer mit einer auf die Dimensionierung der Stellfläche des Bodenrostes abgestimmter Aufstandsfläche paßt. Eimer, welche z.B. eine in Richtung der Längsstreben gesehene Breite der Aufstandsfläche haben, welche wesentlich kleiner ist als die entsprechende Länge der Stellfläche des Bodenrostes können, insbesondere bei einem Verfahren des Reinigungswagens von einem Arbeitsplatz zu dem nächsten, leicht derart verrutschen, daß die Spül- oder Reinigungsflüssigkeit herausschwappt.

Die DE 90 04 319 U1 zeigt und beschreibt einen Reinigungswagen, bei dem die Anpassung an einen neuen Verwendungszweck und unterschiedliche Eimergrößen dadurch ermöglicht wird, daß die Seitenbügel lösbar mit Querstreben des Bodenrostes verbunden sind, so daß zur Verbreiterung des Reinigungswagens der Bodenrost durch einen breiteren ersetzt werden kann. Damit erreicht man aber auch nur, daß auf jeden einmal zusammengebauten Reinigungswagen nur eine bestimmte Behältertype mit auf die Stellfläche des Bodenrostes abgestimmte Aufstandsfläche paßt, ohne der Gefahr eines zu großen Verrutschens zu unterliegen. Bei einem Umbau des Reinigungswagens müssen zudem mindestens die Querstreben entfernt und durch neue ersetzt werden.

Aufgabe der vorliegenden Erfindung ist es, einen Reinigungswagen der eingangs genannten Art zu schaffen, auf welchem zumindest zwei Behälter unterschiedlicher Breite ihrer Aufstandsfläche - entweder gleichzeitig oder wechselweise - sicher gehalten werden.

Diese Aufgabe wird erfindungsgemäß im wesentlichen dadurch gelöst, daß auf den Längsstreben wenigstens eine einen weiteren Anschlag bildende Querstrebe in einem Abstand von der den Querholm aufnehmenden Vertikalebene angeordnet ist, welche kleiner ist als der Abstand der ersten Anschläge von der Vertikalebene, jedoch geringfügig größer als die in Richtung der Längsstreben gesehene Breite der Aufstandsfläche wenigstens eines der Behälter.

Durch die Querstrebe wird wahlweise nicht nur ein Behälter, welcher mit seiner Aufstandsfläche bis zu den ersten Anschlägen reicht, sondern auch ein in seiner Aufstandsfläche kleinerer Behälter sicher auf dem Reinigungswagen gehalten, ohne auf dem Bodenrost herumzurutschen oder ggf. sogar herunterzufallen, da er in seinem Bodenbereich von der zusätzlichen Querstrebe an einem Verrutschen gehindert wird. Dadurch wird die Verwendung und beliebiges Auswechseln zweier unterschiedlicher Behältergrößen bei ein und demselben Reinigungswagen ermöglicht, ohne daß ein Umbau des Reinigungswagens erforderlich ist. Durch die Querstreben wird ferner die Tragfähigkeit des Bodenrostes erhöht, so daß ggf. dünneres Draht- oder sonstiges Strangmaterial für dessen Herstellung eingesetzt werden kann.

Die Stabilität des Bodenrostes kann erfindungsgemäß dadurch weiter erhöht werden, daß die Befestigungsstreben und die Querstreben mit den Längsstreben verschweißt sind.

Ein erfindungsgemäßer Reinigungswagen läßt sich in verschiedenen Ausführungen auch vom Benutzer selbst montieren, wenn seine wesentlichen Teile leicht lösbar, z.B. durch Steck-, Rast-, Schraub- oder Klemmverbindungen zusammenfügbar sind. Dies gilt bspw., wenn die Rollenelemente und/oder der Querholm lösbar mit den Seitenbügeln verbunden, insbesondere verschraubt, sind.

Eine sichere, aber ebenfalls leicht lösbare Befestigung des Bodenrostes erfolgt erfindungsgemäß bspw. dadurch, daß der Bodenrost mit seinen Befestigungsstreben zwischen den Rollenelementen und den freien Enden der Seitenbügel festgespannt wird.

In Weiterbildung dieses Erfindungsgedankens erfolgt das Festspannen des Bodenrostes an den Seitenbügeln mittels die Rollenelemente und die Seitenbügel verbindender Befestigungszapfen. Dadurch ist mit einfachen Mitteln eine schnelle Montage des Reinigungswagens möglich.

Die Stabilität des Bodenrostes wird bei einer vorteilhaften Weiterbildung der Erfindung dadurch weiter erhöht, daß die Längsstreben und/oder die Befestigungsstreben aus einem einstückigen Draht- oder sonstigem Strangmaterial zu einem geschlossenen Draht- bzw. Strangmaterialring gebogen sind.

Zum einfachen Hin- und Herschieben ist bei bekannten Reinigungswagen ein U-förmiger, mit seinen Schenkein nach innen vorgespannter Handhabungsbügel vorgesehen, der an dem Querholm angebracht ist. Dabei ist es besonders vorteilhaft, wenn an den Schenkeln des Handhabungsbügels jeweils ein nach innen gerichteter Zapfen angeordnet ist, der in eine Öffnung des Querholms als Gelenkverbindung eingreift. Somit läßt sich der Handhabungsbügel an dem Querholm von der einen auf die andere Seite durch Schwenken umlegen, so daß der Reinigungswagen leicht von der einen oder der anderen Richtung gezogen oder geschoben werden kann. Zur Begrenzung des Schwenkbereichs des Handhabungsbügels können dabei an den unteren Enden der Schenkel nach innen gerichtete Anschlagstifte angeordnet sein, welche an den Seitenbügeln anschlagen. Erfindungsgemäß kann auch dieser Handhabungsbügel, z.B. als Teil eines Bausatzes, lösbar an dem Querholm angelenkt sein.

Bei bekannten Reinigungswagen ist an dem Querholm eine Moppresse gelagert, mittels derer die jeweils überschüssige Flüssigkeit aus einem Mop ausgepreßt werden kann. Danach kann der Mop erneut zum Wischen eingesetzt werden. Um bei einem Doppelfahrwagen, also einem Reinigungswagen mit zwei Behältern, die Moppresse wahlweise über den Behälter mit klarem Wasser bzw. den Behälter mit reinigungs- und/oder desinfektionshaltigem Wasser schwenken zu können, ist die Moppresse zweckmäßigerweise an dem Querholm um einen Zapfen eines Pressenstativs schwenkbar angeordnet. Erfindungsgemäß ist das Pressenstativ lösbar mit dem Querholm verbunden. Dadurch ist es möglich, das Pressenstativ als Teil eines Bausatzes leicht zu montieren und entsprechend etwaigen anderen Anforderungen auszutauschen.

Auch der Querholm selbst kann mit den Seitenbügeln lösbar verbunden sein.

Dabei kann zur stabilen und verwindungssteifen Befestigung der Querholm die Seitenbügel im wesentlichen formschlüssig übergreifen.

Bei einer weiteren bevorzugten Ausführungsform der Erfindung bestehen die Seitenbügel, der Bodenrost, der Querholm und/oder das Pressenstativ aus Edelstahl. Dadurch wird die Haltbarkeit des Reinigungswagens erhöht und das Abplatzen von ansonsten notwendigen Beschichtungen vermieden. Edelstahl bietet sich zudem insbesondere aus hygienischen Gründen im Krankenhausbereich an, da er leicht saubergehalten werden kann.

Weitere Ziele, Merkmale, Vorteile und Anwendungsmöglichkeiten der vorliegenden Erfindung ergeben sich aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen:
- Fig. 1: eine perspektivische Ansicht eines erfindungsgemäßen Reinigungswagens mit zwei Eimern,
- Fig. 2: eine perspektivische Ansicht einer zweiten Ausführungsform der Erfindung ohne Eimer,
- Fig. 3: eine perspektivische Ansicht einer dritten Ausführungsform der Erfindung ohne Eimer,
- Fig. 4: einen Teilschnitt durch die Befestigung eines Rollenelements, und
- Fig. 5: eine Teilansicht eines Querholms mit Pressenstativ gemäß einem anderen Ausführungsbeispiel der Erfindung.

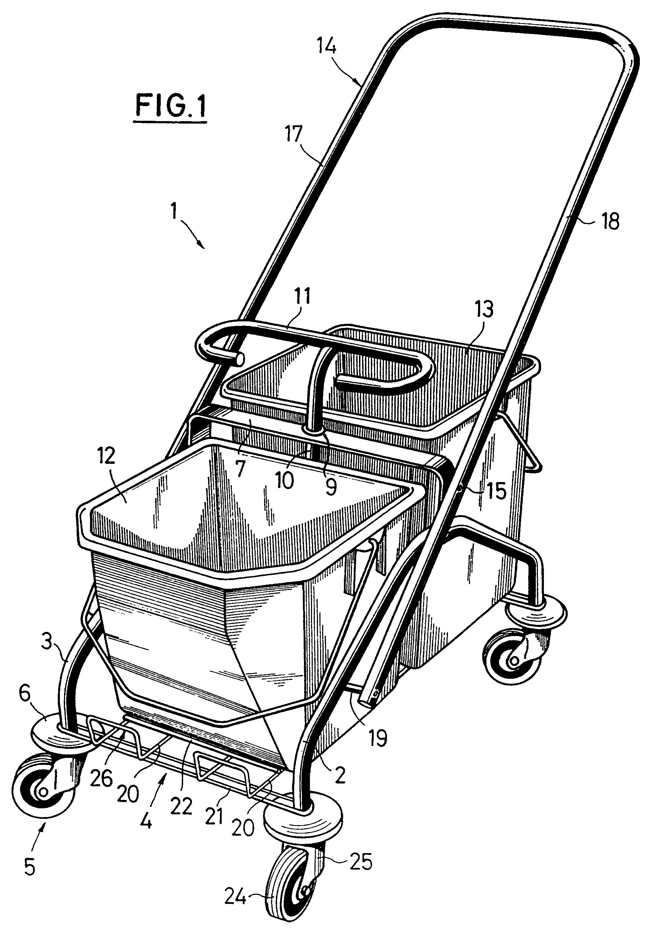

Der in Fig. 1 dargestellte Reinigungswagen 1 besteht im wesentlichen aus zwei Seitenbügeln 2, 3 und einem zwischen diesen gehaltenen Bodenrost 4, welcher seinerseits die Seitenbügel 2, 3 an ihren unteren freien Enden auf Abstand hält. An den Enden der Seitenbügel 2, 3 sind Rollenelemente 5 angeordnet, die als Lenkrollen ausgebildet und mit Stoßfängern 6 versehen sind. Die obersten, mittleren Bereiche der Seitenbügel 2, 3 sind über einen brückenförmig ausgebildeten Querholm 7 miteinander verbunden.

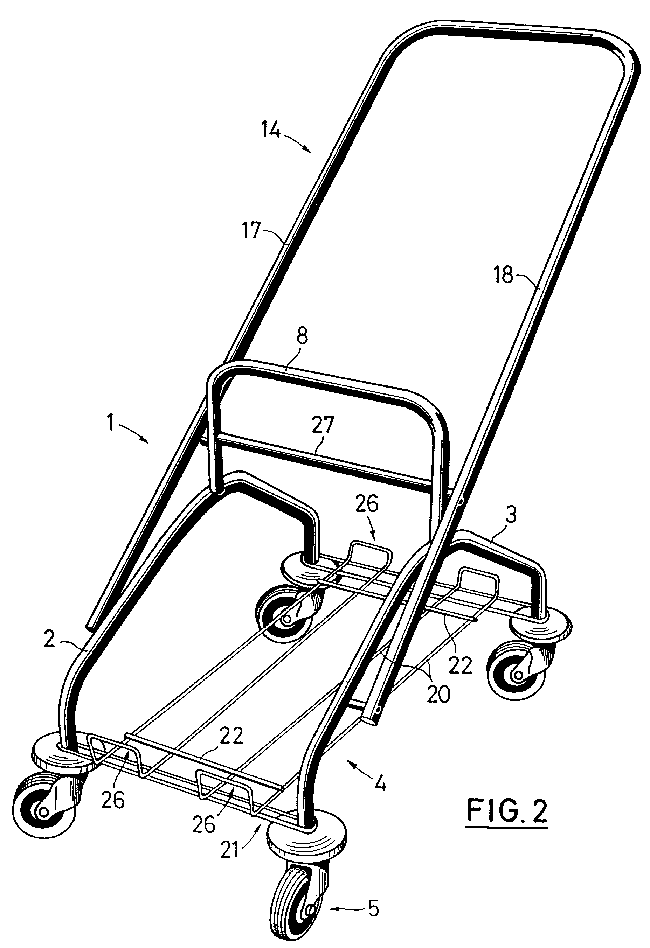

In eine Einstecköffnung 9 des Querholms 7 ist ein Lagerzapfen 10 eines Pressenstativs 11 eingesetzt, um den das Pressenstativ 11 schwenkbar ist, so daß eine an dem Pressenstativ 11 angebrachte (nicht dargestellte) Moppresse über den einen oder den anderen von zwei auf dem Bodenrost 4 stehenden, im dargestellten Fall als Eimer ausgebildeten Behältern 12, 13 geschwenkt werden kann. Das Pressenstativ 11 kann senkrecht nach oben aus der Einstecköffnung 9 herausgezogen werden. Andererseits kann jedoch, wie in Fig. 2 dargestellt, der Querholm 8 auch als einfaches Pressenlager mit Anschlagholm 27 für die Moppresse ausgeführt sein, wenn ein Verschwenken der Moppresse um eine senkrechte Achse nicht gefordert wird.

An den Querholmen 7, 8 ist jeweils ein U-förmig ausgebildeter, mit seinen Schenkeln 17, 18 nach innen vorgespannter Handhabungsbügel 14 angebracht, welcher mit nach innen gerichteten Gelenkzapfen 15 in an dem Querholm 7, 8 ausgebildete beiderseitige Öffnungen 16 eingreift und um welche er schwenkbar ist. Damit kann der Reinigungswagen 1 durch Umlegung des Handhabungsbügels 14 von der einen auf die andere Seite einfach in beiden Fahrtrichtungen bewegt werden. Zur Begrenzung des Schwenkbereichs des Handhabungsbügels 14 sind an den unteren Enden seiner Schenkel 17, 18 nach innen gerichtete Anschlagstifte 19 angeordnet, die in Endstellung an den Seitenbügeln 2, 3 anschlagen.

Der Bodenrost 4 besteht im wesentlichen aus Längsstreben 20, welche in ihren Endbereichen über quer verlaufende Befestigungsstreben 21 miteinander verschweißt sind. Die Längsstreben 20 und die Befestigungsstreben 21 sind jeweils aus einem einstückigen Draht- oder sonstigem Strangmaterial zu einem Draht- oder Strangmaterialring gebogen. Die Längsstreben 20 sind in ihren Endbereichen zur Bildung eines ersten Anschlages 26 nach oben umgebogen, der verhindert, daß ein auf dem Bodenrost 4 angeordneter Behälter 13, dessen Aufstandsfläche im wesentlichen der Stellfläche des Bodenrostes 4 zwischen der den Querholm 7, 8 aufnehmenen Vertikalebene und den Anschlägen 26 entspricht, bei einem Verfahren des Reinigungswagens 1 an eine andere Stelle zu stark hin- und herrutscht oder gar von dem Reinigungswagen 1 stirnseitig herunterfällt. Seitlich wird der Behälter 13 von den Seitenbügeln 2, 3 gehalten. Der Bodenrost 4 kann ein oder mehrere Längsstrebenpaare 20 aufweisen.

Auf den Längsstreben 20 sind, wie insbesondere aus Fig. 2 ersichtlich, Querstreben 22 in einem solchen Abstand beidseits von der genannten Vertikalebene angebracht, daß ein Verrutschen eines Behälters 12 mit entsprechend kleinerer Aufstandsfläche verhindert wird. Diese Querstrebe 22 ermöglicht es, daß auf den Bodenrost wahlweise ein kleinerer Behälter 12 oder ein größerer Behälter 13 gestellt wird, ohne daß ein Umbau des Reinigungswagens 1 erforderlich ist und ohne daß die Gefahr eines übermäßigen Verrutschens besteht, da die jeweilige Querstrebe 22 als Anschlag für den Behälter 12 mit kleinerer Aufstandsfläche dient, wie aus Fig. 1 ersichtlich. Auch die Querstreben 22 sind mit den Längsstreben 20 verschweißt.

Die Querstreben 22 können auf die Längsstreben 20 fest in vorgegebener Lage geschweißt sein. Es ist aber auch möglich, die Querstreben 22 in ihrem Abstand von der Vertikalebene veränderlich an den Längsstreben 20 lösbar festzulegen. Auf diese Weise kann die jeweils gewünschte Stellfläche des Bodenrostes 4 an die hinsichtlich ihrer Aufstandsfläche unterschiedlichsten Behältertypen angepaßt werden.

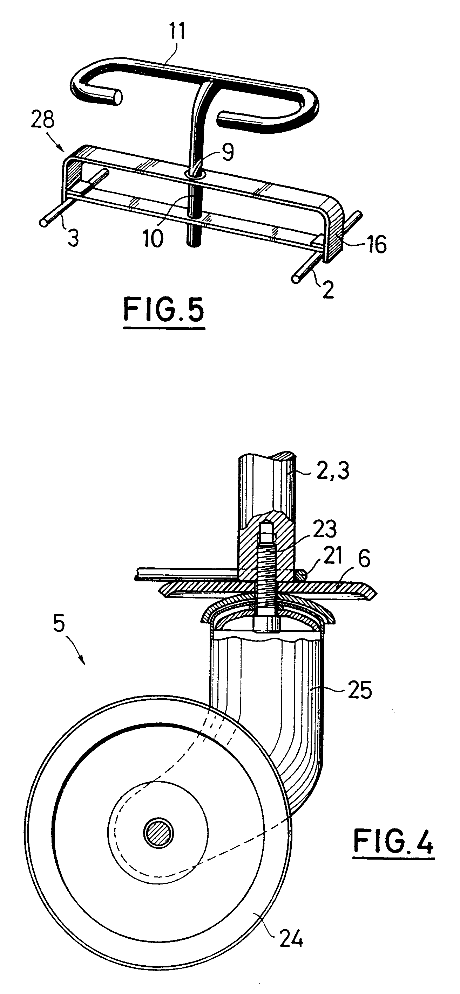

Die an den Enden der Seitenbügel 2, 3 angebrachten Rollenelemente 5 sind, wie aus Fig. 4 zu ersehen, über Befestigungszapfen 23 mit den Seitenbügekn 2, 3 verschraubt oder verrastet. Die Rollenelemente 5 bestehen im wesentlichen aus einer Rolle 24 und einer Lenkführung 25, welche über den Befestigungszapfen 23 in ein offenes freies Ende der Seitenbügel 2, 3 eingeschraubt oder eingesteckt ist. Beim Einschrauben oder Einstecken der Lenkführung 25 werden ein Stoßfänger 6 sowie die Befestigungsstrebe 21 des Bodenrostes 4 zwischen der Lenkführung 25 und dem Ende des Seitenbügels 2, 3 festgespannt. Dabei durchtritt der Befestigungszapfen 23 die durch das Umbiegen der Befestigungsstrebe 21 entstandene Schlaufe, wodurch neben dem Festspannen eine zusätzliche Sicherung des Bodenrostes 4 gegen ein Lösen gegeben ist. Der Stoßfänger 6 verhindert eine Beschädigung von Wänden oder Möbelstücken, wenn der Reinigungswagen 1 beim Verfahren versehentlich dagegenstößt.

Bei einem Reinigungswagen 1 gemäß Fig. 1 und 2 werden zwei Behälter 12, 13, einer mit klarem Wasser und einer mit reinigungsmittel- oder desinfektionsmittelhaltigem Wasser verwendet, die auf jeweils einer Seite des z.B. symmetrisch zu der den Querholm 7, 8 aufnehmenden Vertikalebene aufgebauten Reinigungswagens 1 stehen. Dabei kann zwischen zwei Behältergrößen, bspw. einem 17 l- und einem 25 l-Eimer gewählt werden, da der jeweilige Eimertyp entweder durch die Querstrebe 22 (Behälter 12) bzw. die durch die hochgebogenen Endabschnitte der Längsstreben 20 gebildeten Anschläge 26 (Behälter 13) gegen Verrutschen auf dem Reinigungswagen 1 gesichert sind. Durch Vorsehen noch weiterer ggf. unterschiedlich starker Querstreben 22 in unterschiedlichen Abständen von der Vertikalebene oder, wie erwähnt, durch Verschieben der Querstreben 22 in Längsrichtung, können auch noch Behälter anderer Dimensionierung entsprechend gesichert werden.

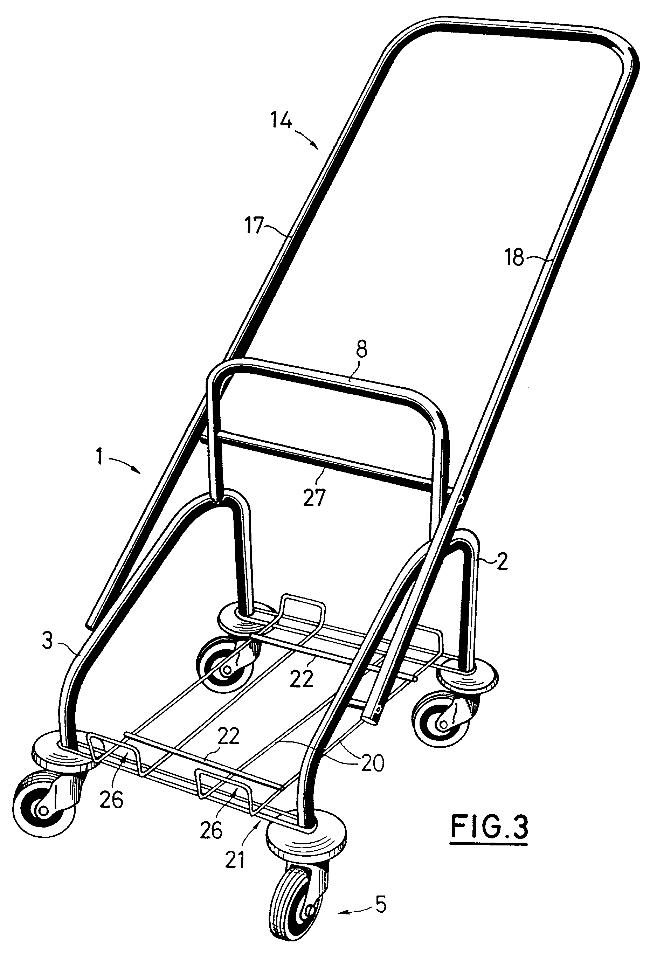

Für verschiedene Anwendungsfälle wird nur ein einziger Behälter benötigt. Bei der in Fig. 3 gezeigten Ausführungsform der Erfindung ist die Grundfläche des Reinigungswagens 1 entsprechend kleiner ausgebildet, so daß nur auf einer Seite des Querholms 8 ein Behälter 12 oder 13 Platz findet. Auch bei dieser Ausführungsform kann wegen der Querstreben 22 und ggf. weiterer Querstreben zwischen mindestens zwei Behältergrößen beliebig gewählt werden, ohne daß ein Umbau des Reinigungswagens 1 erforderlich wäre.

Werden Behälter mit einer größeren Breite benötigt, so kann der Reinigungswagen 1 durch Austausch des gesamten Bodenrostes 4 und des Querholms 7, 8 auf beliebige andere Breiten umgerüstet werden. Fig. 5 veranschaulicht, wie bspw. zu diesem Zweck der Querholm 28 austauschbar auf den Seitenbügeln 2, 3 gehalten sein kann.

### Bezugszeichenliste:

- 1: Reinigungswagen
- 2: Seitenbügel
- 3: Seitenbügel
- 4: Bodenrost
- 5: Rollenelemente
- 6: Stoßfänger
- 7: Querholm
- 8: Querholm
- 9: Einstecköffnung
- 10: Lagerzapfen
- 11: Pressenstativ
- 12: Behälter
- 13: Behälter
- 14: Handhabungsbügel
- 15: Gelenkzapfen
- 16: Öffnung
- 17: Schenkel
- 18: Schenkel
- 19: Anschlagstifte
- 20: Längsstreben
- 21: Befestigungsstreben
- 22: Querstreben
- 23: Befestigungszapfen
- 24: Rollen
- 25: Lenkführungen
- 26: Anschläge
- 27: Anschlagholm
- 28: Querholm

## Patentansprüche

1. Reinigungswagen (1) zum Transport von Behältern (12, 13), wie Eimern, unterschiedlicher Aufstandsfläche, mit Seitenbügeln (2,3), einem die Seitenbügeln (2, 3) verbindenden Querholm (7, 8), an den Enden der Seitenbügel (2, 3) angeordneten Rollenelementen (5), sowie einem aus stirnseitigen Befestigungsstreben (21) und diese verbindenden Längsstreben (20) gebildeten Bodenrost (4) für die Aufnahme der Behälter (12, 13) , wobei der Bodenrost (4) stirnseitig z.B. durch Aufbiegungen der Längsstreben (20) gebildete erste Anschläge (26) aufweist, dadurch gekennzeichnet, daß auf den Längsstreben (20) wenigstens eine, einen weiteren Anschlag bildende Querstrebe (22) in einem Abstand von der den Querholm (7, 8) aufnehmenden Vertikalebene angeordnet ist, welcher kleiner ist als der Abstand der ersten Anschläge (26) von der Vertikalebene, jedoch geringfügig größer als die in Richtung der Längsstreben (20) gesehene Breite der Aufstandsfläche wenigstens einer der Behälter (12, 13).

2. Reinigungswagen nach Anspruch 1, dadurch gekennzeichnet, daß die Befestigungsstreben (21) und die Querstreben (22) mit den Längsstreben (20) verschweißt sind.

3. Reinigungswagen nach Anspruch 1 oder 2, dadurch gekennzeichnet, daß die Rollenelemente (5) lösbar mit den freien Enden der Seitenbügel (2, 3) verbunden, insbesondere verschraubt, sind.

4. Reinigungswagen nach einem der Ansprüche 1 bis 3, dadurch gekennzeichnet, daß der Bodenrost (4) mit seinen Befestigungsstreben (21) zwischen den Rollenelementen (5) und den freien Enden der Seitenbügel (2, 3) lösbar festgespannt ist.

5. Reinigungswagen nach Anspruch 4, dadurch gekennzeichnet, daß das Festspannen des Bodenrostes (4) an den Seitenbügeln (2, 3) mittels die Rollenelemente (5) und die Seitenbügel (2, 3) verbindender Befestigungszapfen (23) erfolgt.

6. Reinigungswagen nach einem der Ansprüche 1 bis 5, dadurch gekennzeichnet, daß die Längsstreben (20) und/oder die Befestigungsstreben (21) aus einem einstückigen Draht oder sonstigem Strangmaterial zu einem geschlossenen Draht- oder Strangmaterialring gebogen sind.

7. Reinigungswagen nach einem der Ansprüche 1 bis 6 mit einem U-förmigen, mit seinen Schenkeln (17, 18) nach innen vorgespannten Handhabungsbügel (14), an dessen Schenkeln (17, 18) jeweils ein nach innen gerichteter Zapfen (15) angeordnet ist, welcher in eine Öffnung (16) des Querholms (7, 8) eingreift und an dessen Schenkeln (17, 18) an den jeweiligen unteren Enden nach innen gerichtete Anschlagstifte (19) angeordnet sind, welche der Begrenzung des Schwenkbereichs des Handhabungsbügels (14) an den Seitenbügeln (2, 3) dienen, dadurch gekennzeichnet, daß der Handhabungsbügel (14) lösbar an dem Querholm (7, 8) angelenkt ist.

8. Reinigungswagen nach einem der Ansprüche 1 bis 7, dadurch gekennzeichnet, daß an dem Querholm (7) ein vorzugsweise um einen Lagerzapfen (10) schwenkbares Pressenstativ (11) lösbar angeordnet ist.

9. Reinigungswagen nach einem der Ansprüche 1 bis 8, dadurch gekennzeichnet, daß der Querholm (7) lösbar mit den Seitenbügeln (2, 3) verbunden ist.

10. Reinigungswagen nach einem der Ansprüche 1 bis 9, dadurch gekennzeichnet, daß der Querholm (7, 8) die Seitenbügel (2, 3) im wesentlichen formschlüssig übergreift.

11. Reinigungswagen nach einem der Ansprüche 1 bis 10, dadurch gekennzeichnet, daß die Seitenbügel (2, 3), der Bodenrost (4), der Querholm (7, 8) und/oder das Pressenstativ (11) aus Edelstahl bestehen.
